Europäisches Patentamt

European Patent Office

Office européen des brevets

(11) Publication number: **0 252 704**
**A2**

## (12) EUROPEAN PATENT APPLICATION

(21) Application number: **87305946.3**

(22) Date of filing: **06.07.87**

(51) Int. Cl.⁴: **B62M 9/12**

(30) Priority: **07.07.86 GB 8616542**

(43) Date of publication of application:
**13.01.88 Bulletin 88/02**

(84) Designated Contracting States:
**AT BE CH DE ES FR GB GR IT LI LU NL SE**

(71) Applicant: **Kirk, Francis George**
**12 Kenworthy Road**
**Braintree Essex(GB)**

(72) Inventor: **Kirk, Francis George**
**12 Kenworthy Road**
**Braintree Essex(GB)**

(74) Representative: **Holliday, Frank et al**
**Marks & Clerk Friars House 6-10 Parkway**
**Chelmsford, Essex CM2 0NF(GB)**

(54) Bicycle change speed arrangement.

(57) There is provided a bicycle frame, particularly one cast in a lightweight alloy or metal such as magnesium, characterised in that a mounting for a chain guide sprocket for a rear derailleur comprises a bracket 22 adapted to receive the guide sprocket mechanism in a threaded hole 28, and pivotally mounted on the frame so as to pivot rearwards as indicated in dashed lines from its normal position of use to create a clearance for the removal of a rear wheel mounted by means of a spindle in a slot 13. Preferably the bracket 22 is made of a plastics material which is less structurally strong than the metal of the frame, so that the bracket 22 will snap preferentially or sacrificially in the event of an impact, so that the frame itself will not be damaged, and the bracket 22 merely needs to be replaced. The bracket 22 may be somewhat yielding so as to absorb light impacts prior to fracture. The bracket 22 may be pivoted onto the frame by means of a snap-in pin 23.

FIG.3.

## BICYCLE CHANGE SPEED ARRANGEMENT

This invention relates to change speed arrangements for bicycles, and more particularly to rear derailleur change speed mechanisms.

Conventionally, a rear derailleur comprises a chain guide sprocket laterally movable on a spindle, which is itself threadedly mounted on a bracket forming an integral extension of the frame. There is usually also a tensioning sprocket mounted on a spring loaded arm associated with the chain guide sprocket.

The wheel itself carries a multiple sprocket, and the chain guide sprocket has the function of positioning the chain to run on the wheel sprocket of the selected size. The wheel itself runs on a spindle mounted in open ended slots provided in the rear fork parts of the frame, and these slots may be generally vertical in a short wheelbase bicycle.

In operation, when changing the wheel for any reason, there is usually a problem in moving the multiple sprocket past the chain guide sprocket and the tensioning sprocket. This is particularly acute in the case of a short wheelbase bicycle.

Also, should the bicycle fall over and land on the rear derailleur, or should the derailleur otherwise sustain an impact, there is a possibility that the bracket for the chain guide sprocket spindle may snap off. This usually means irreparable damage to the frame, which may have to be scrapped, particularly if the frame is integrally cast in a lightweight alloy or metal such as magnesium.

In accordance with a first aspect of the present invention, there is provided a bicycle frame comprising a rear fork configuration including open-ended slots to receive a rear wheel spindle, in which a mounting for a chain guide sprocket for a rear derailleur comprises a bracket adapted to receive a guide sprocket mechanism of the derailleur, the said bracket being pivotally mounted on the frame to the rear of one of the said slots so as to pivot rearwards from its normal position of use to create a clearance for the removal of the rear wheel spindle.

It is particularly advantageous if the bracket is made of a plastics material which is less structurally strong than the metal of the frame, so that the bracket will snap preferentially or sacrificially in the event of an impact, so that the frame itself will not be damaged, and the bracket merely needs to be replaced. The bracket may be somewhat yielding so as to absorb light impacts prior to fracture. The bracket may be pivoted onto the frame by means of a snap-in pin.

In accordance with a second aspect of the invention, there is provided a rear derailleur including a pivotable and detachable bracket as set forth above.

The invention will be further described with reference to the accompanying drawings, in which:

Figure I is a side elevation of a cast bicycle frame to which the invention is particularly to be applied;

Figure 2 is a perspective view of a derailleur mechanism;

Figure 3 is an elevation, to an enlarged scale, showing a preferred form of the invention;

Figure 4 is a sectional view of a bracket shown in figure 3; and

Figure 5 is a rear elevation of the bracket and an adjacent part of the frame.

Figure I shows a cast magnesium bicycle frame of a type generally described in the published International patent application no. W086/05458, and including a cross bar I of I section with lightening holes 2, a lower bar 3 of C section closed by a second casting forming a panel 4, a tubular head 5 and a saddle stem 6 having a tubular saddle-mounting portion 2I and a main portion of V section with lightening holes 7. The lower bar 3 joins the saddle stem 6 at an intermediate position, well above a location 8, replacing a bottom bracket, to receive a crank bearing in an insert 9. Pairs of upper and lower rear forks II and I2 are integrally cast with the frame and project rearwardly from the saddle stem 6. At a junction zone I4 between each corresponding upper and lower rear fork II and I2 there is provided a generally vertical slot I3 to receive and locate a rear wheel spindle in the normal conventional manner.

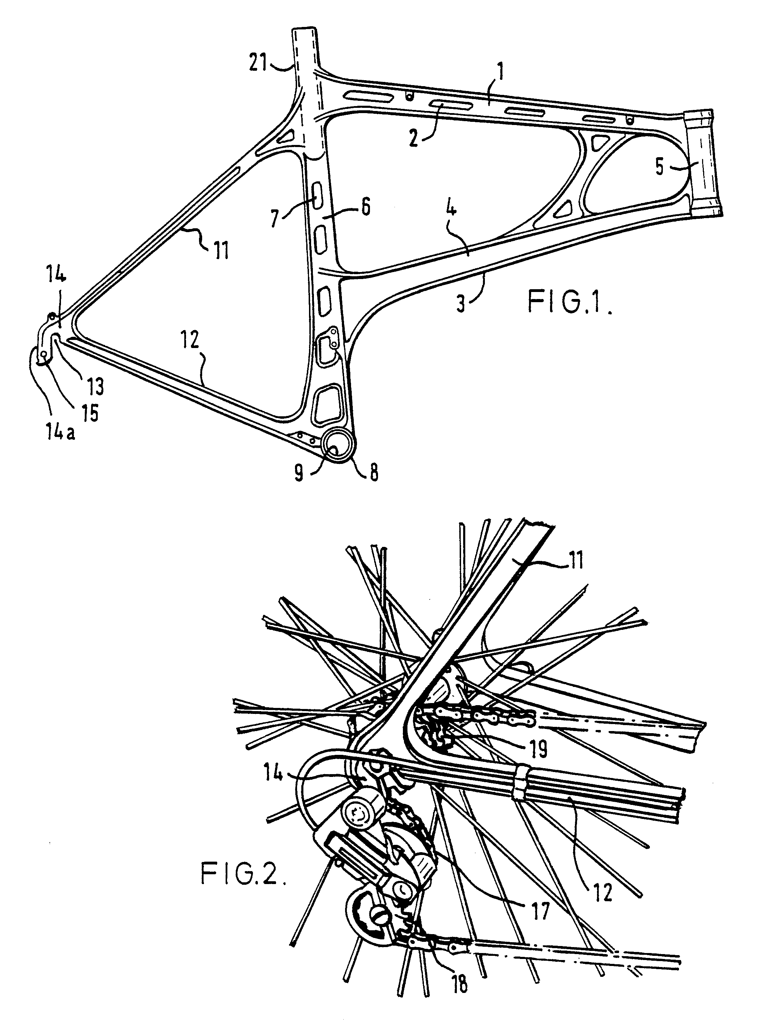

In the arrangement shown in figure I, an integral extension I4a to the junction zone I4 is provided to mount a conventional derailleur including a chain guide sprocket I7 (see also figure 2) and a tensioning sprocket I8 by means of a threaded hole I5.

Figure 2 also shows a multiple sprocket I9 on the rear wheel.

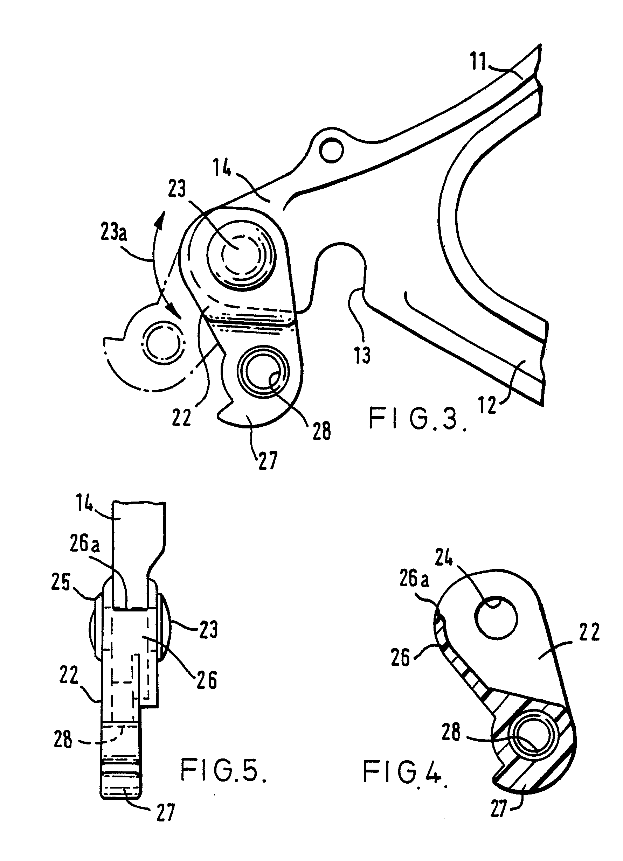

Turning now to figure 3, it will be seen that the extension I4a is omitted, so that the slot I3 does not have an extended edge at its left side as viewed in figures I and 3. A bifurcated bracket 22 of plastics material is mounted on the junction zone I4, for pivoting movement as indicated by the double arrow 23a, by means of a snap-in pivot pin 23 passing through aligned holes 24 in the bracket 22 and (not shown) in the junction zone.

A boss 25 surrounding one of the holes 24 includes a detent formation to engage a snap fitting element on the pin 23. The bracket 22 has a wall 26 extending between its sides behind the junction zone, and an end 26a of this wall 26 abuts the edge of the junction zone 14 to limit clockwise pivotal movement of the bracket 22 about the pin 23. The extreme clockwise position is illustrated in dashed lines in figure 3.

The bracket 22 has a solid lower part 27 with an aperture, preferably lined with a steel liner, having a thread 28 for receiving a spindle for a conventional cable-operated derailleur mechanism.

In use, the bracket 22 will normally be in the position illustrated in full lines in figure 3. When it is desired to remove the rear wheel, the bracket 22 may be pivoted to the dashed line position to clear the derailleur mechanism from the path of the spindle and, especially, the multiple sprocket on the back wheel. After re-insertion of the wheel, the bracket is returned to its normal position.

The material of the bracket 22 is a plastics material with some resilience so that it absorbs minor mechanical shocks, but its strength is chosen that it will break preferentially to the junction zone 14 or other parts of the frame, whereby upon accidental impact, such as may be occasioned when the rider falls off or when the bicycle falls over, the bracket fractures and protects the frame against damage, which might be irreparable.

The replacement of the bracket 22 is cheap and easy. The pivot pin 23 is also a comparatively cheap part to replace, and is also engineered to fail before the fracture of the frame if it is subject to abnormal loads.

Various modifications may be made within the scope of the invention. For example, although the invention has been described in connection with a cast magnesium frame, it is usable with conventional fabricated frames, or with cast frames in other materials.

## Claims

1. A bicycle frame comprising a rear fork configuration (11,12) including open-ended slots (13) to receive a rear wheel spindle, characterised in that a mounting for a chain guide sprocket for a rear derailleur comprises a bracket (22) adapted to receive a guide sprocket mechanism of the derailleur, the said bracket (22) being pivotally mounted on the frame to the rear of one of the said slots (13) so as to pivot rearwards from its normal position of use to create a clearance for the removal of the rear wheel spindle.

2. A bicycle frame according to claim 1, characterised in that the frame is cast in magnesium.

3. A bicycle frame according to claim 1 or 2, characterised in that the bracket (22) threadedly receives the guide sprocket mechanism.

4. A bicycle frame according to any of the preceding claims, characterised in that the bracket (22) is made of a plastics material which is less structurally strong than the metal of the frame, so that the bracket (22) will snap preferentially or sacrificially in the event of an impact.

5. A bicycle frame according to claim 4, characterised in that the bracket (22) is somewhat yielding so as to absorb light impacts prior to fracture.

6. A bicycle frame according to any of the preceding claims, characterised in that the bracket (22) is pivoted onto the frame by means of a snap-in pin (23).

7. A rear derailleur mechanism characterised in that it includes a pivotable and detachable bracket (22) receiving a guide sprocket mechanism and arranged to be pivotally mounted on a bicycle frame so as to pivot rearwards from its normal position of use to create a clearance for the removal of a rear wheel from the frame.

8. A rear derailleur mechanism according to claim 7, characterised in that the bracket (22) is made of a plastics material which is somewhat yielding so as to absorb light impacts prior to fracture.

9. A rear derailleur mechanism frame according to claim 7 or 8, characterised in that the bracket (22) is adapted to be pivoted onto the frame by means of a snap-in pin (23).

FIG.1.

FIG.2.

FIG.3.

FIG.5.

FIG.4.